# EUROPEAN PATENT SPECIFICATION

(11) **EP 2 380 728 B1**
(45) Date of publication and mention of the grant of the patent: **21.08.2013**
(21) Application number: 11163306.1
(22) Date of filing: 20.04.2011
(51) Int. Cl.: B29D 30/20, B29D 30/36, B29D 30/72

(54) **Tyre building method using one building drum**
Reifenaufbauverfahren mittels einer Reifenwickeltrommel
Procédé servant à fabriquer des pneus utilisant un tambour de construction

(30) Priority: 20.04.2010 IT TO20100323
(43) Date of publication of application: 26.10.2011
(73) Proprietor: Bridgestone Corporation, Tokyo 104-8340 (JP)
(72) Inventor: Crociani, Emanuele, 00040 Ariccia (IT)
(74) Representative: Bergadano, Mirko

(56) References cited:
- EP-A1- 0 302 935
- US-A1- 2002 108 716

## Description

### TECHNICAL FIELD

The present invention relates to a tyre building method using one building drum.

### BACKGROUND ART

A tyre comprises a toroidal carcass, which comprises a partly turned-up body ply and two annular beads, and supports an annular tread. A tread belt comprising a number of superimposed tread plies is interposed between the carcass and the tread; and an innerliner, impermeable to air, is placed inside the body ply to retain the air inside the tyre and maintain its inflation pressure. On the outside, the body ply supports two sidewalls, between the tread and the beads; and two abrasion gum strips below the sidewalls, at the beads.

A so-called 'envelope' tyre structure is now commonly used, in which the width of the body ply is increased, so each lateral end of the body ply is located beneath the tread belt (and therefore beneath the tread), and the body ply, being superimposed on itself, is twice as thick along the full height of the sidewalls, thus greatly increasing the rigidity of the tyre with only a small increase in total weight.

The envelope structure can be produced in either 'tread over sidewall' mode, in which each sidewall is inserted beneath the tread; or in 'sidewall over tread' mode, in which each sidewall is placed over the tread.

At present, the envelope structure can be produced in 'tread over sidewall' mode on one single-stage building drum, which allows for making one turn-up of both the body ply and the sidewalls before the tread belt and the tread are applied. The same, however, does not apply to 'sidewall over tread' mode, which, to fold the body ply beneath the tread belt without inserting the sidewalls beneath the tread, calls for first turning up the body ply, and then the sidewalls, using two separate building drums.

In other words, modern so-called 'unistage' production machines, equipped with one single-stage building drum, are at present unable to produce envelope tyres in 'sidewall over tread' mode, which calls for special machines featuring two separate building drums, thus seriously limiting the scope of production plants equipped with unistage production machines.

Patent application EP0302935Al represents the closest prior art and discloses a tyre building method using one single-stage building drum for building a radial tyre for aircraft having a inner carcass ply and a pair of side carcass plies, each of which is arranged between the inner carcass ply and a sidewall.

### DESCRIPTION OF THE INVENTION

It is an object of the present invention to provide a tyre building method using one building drum, designed to eliminate the above drawbacks, and which in particular is cheap and easy to implement.

According to the present invention, there is provided a tyre building method using one building drum, as claimed in the accompanying Claims.

### BRIEF DESCRIPTION OF THE DRAWINGS

A number of non-limiting embodiments of the present invention will be described by way of example with reference to the accompanying drawings, in which
Figure 1 shows a schematic cross section, with parts removed for clarity, of part of a tyre built using the method according to the present invention;
Figure 2 shows a schematic of a single-stage building drum used to build the Figure 1 tyre;
Figures 3-14 show schematics of steps in the building of the Figure 1 tyre using the single-stage drum in Figure 2.

### PREFERRED EMBODIMENTS OF THE INVENTION

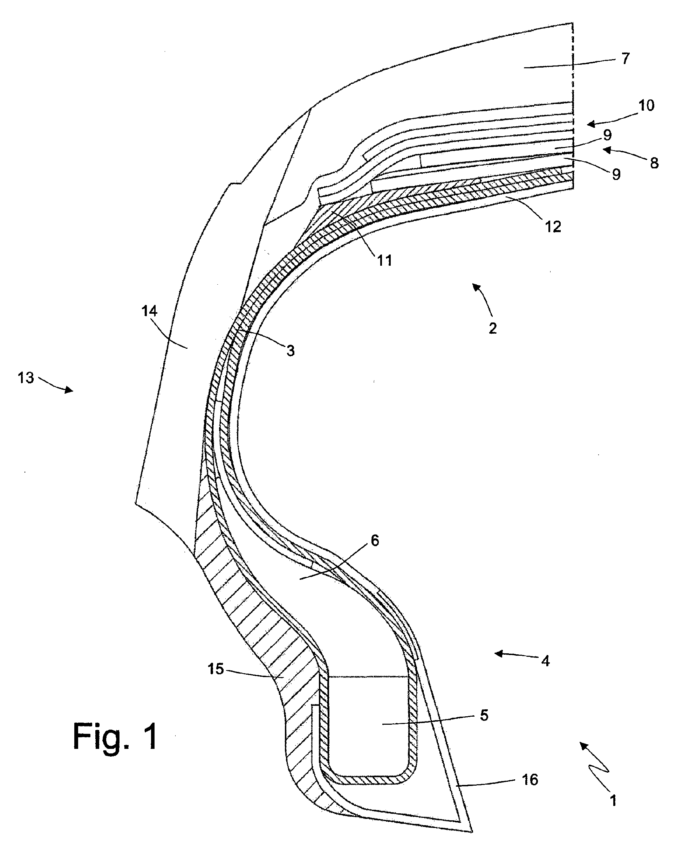

Number 1 in Figure 1 indicates as a whole a tyre comprising a toroidal carcass 2, which comprises a single body ply 3 turned up partly on itself and so having two superimposed lateral layers.

Two annular beads 4 are located on opposite sides of carcass 2, and are each enclosed by body ply 3 and have a bead core 5 reinforced with a number of turns of metal wire, and a bead filler 6.

Carcass 2 supports an annular tread 7; a tread belt 8 comprising two tread plies 9 is interposed between carcass 2 and tread 7; and each tread ply 9 comprises a number of cords (not shown), which are embedded in a rubber strip, are arranged side by side with a given spacing, and are inclined at a given angle to the equatorial plane of tyre 1.

A reinforcing layer 10, known as a 'cap ply', is provided on top of tread belt 8 (i.e. between tread belt 8 and tread 7), and is made from a continuous green-rubber strip reinforced internally with nylon threads or similar, and which is wound longitudinally (i.e. transversely and about the central axis of tyre 1) on top of tread belt 8 to protect and retain tread plies 9.

Two rubber inserts 11, known as tread ply inserts, are interposed between body ply 3 and the outer ends of tread belt 8 to act as a cushion.

Two opposite lateral ends of body ply 3 are located beneath tread belt 8, close to and further inwards than the inner sides (i.e. the sides facing the centre of tyre 1) of tread ply inserts 11, to form an envelope structure of tyre 1.

An innerliner 12, impermeable to air, is placed inside body ply 3 to retain the air inside and maintain the inflation pressure of tyre 1.

On the outside, body ply 3 supports two sidewalls 13, between tread 7 and beads 4. As shown clearly in Figure 1, sidewalls 13 are located over tread 7, which means tyre 1 is produced in 'sidewall over tread' mode. Each sidewall 13 comprises an outer portion 14 made from a soft rubber mix highly resistant to the external agents (air and sunlight); and an abrasion gum strip 15 made from a hard rubber mix highly resistant to abrasion (when tyre 1 is mounted on the wheel rim, abrasion gum strips 15 are positioned contacting the edges of the rim). Outer portion 14 and abrasion gum strip 15 are normally extruded together to form sidewall 13.

Each bead 4 is enclosed in a canvas chafer 16 for strengthening the bead 4 area and protecting bead core 5.

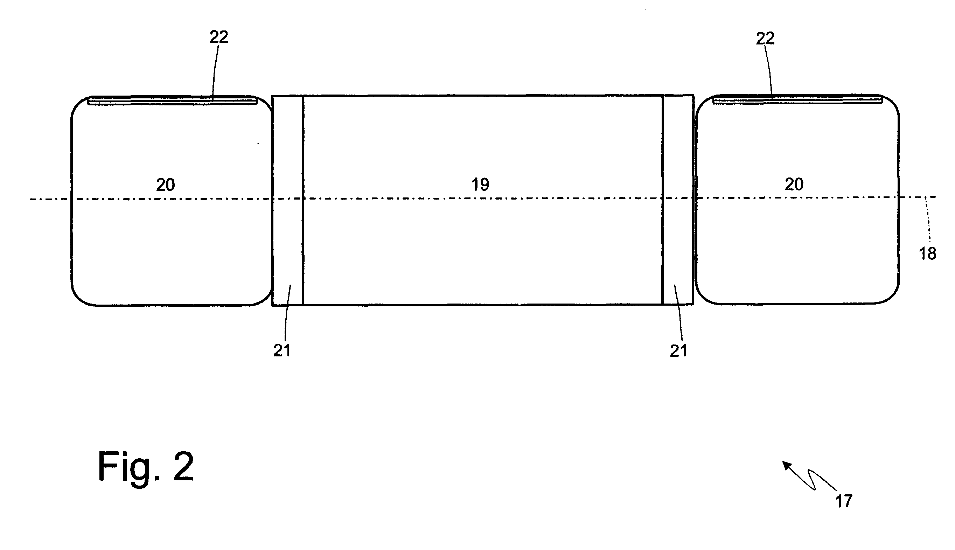

Number 17 in Figure 2 indicates as a whole a single-stage building drum of the type described in Patent Applications EP1820628A2 and EP2008798A1, which are included herein by way of reference.

Building drum 17 is mounted on a central shaft (not shown) mounted to rotate about a longitudinal axis of rotation 18, and comprises a centre section 19 expandable and contractable both radially (i.e. perpendicular to axis of rotation 18, to adjust its outside diameter) and axially (i.e. parallel to axis of rotation 18, to adjust its length); and two lateral sections 20 located on opposite sides of centre section 19 and movable axially (i.e. parallel to axis of rotation 18) to accompany axial expansion or contraction of centre section 19 (i.e. the axial movement of lateral sections 20 is always coordinated with axial expansion or contraction of centre section 19).

Building drum 17 comprises two specularly identical half-drums movable axially to and from each other (i.e. parallel to longitudinal axis of rotation 18). More specifically, each half-drum is mounted on a slide to move axially with respect to the central shaft, under the control of a pneumatic actuator, and supports a respective lateral section 20 and respective half of centre section 19, so that axial movement of the two half-drums expands or contracts centre section 19 axially.

Each lateral section 20 has a bead locking device 21 expandable and contractable radially (i.e. perpendicular to longitudinal axis of rotation 18) with respect to lateral section 20; and a bladder 22, which is inflated with compressed air to follow the turn-up operations.

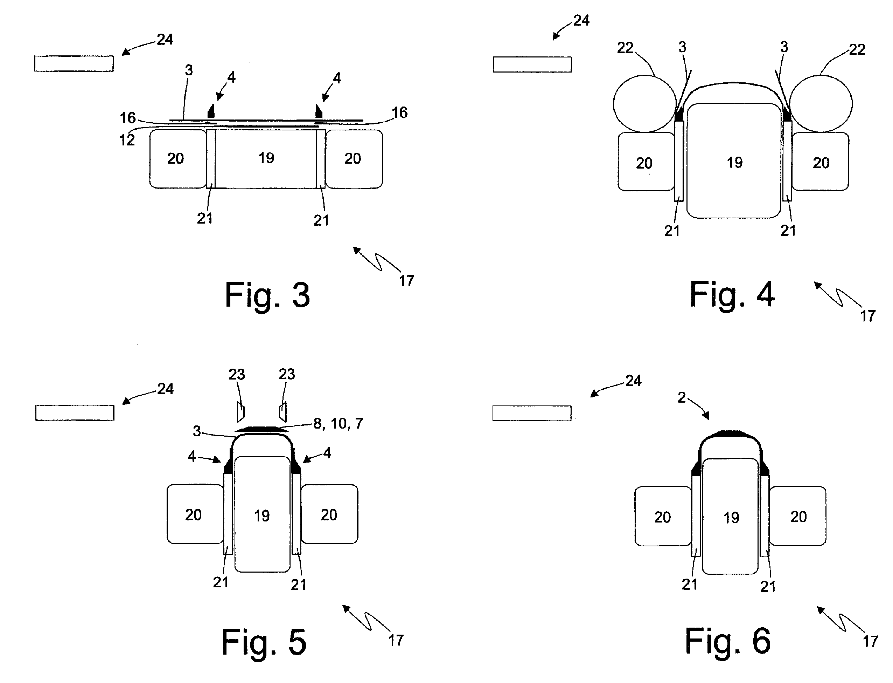

Construction of tyre 1 using single-stage building drum 17 will now be described with reference to Figures 3-14.

As shown in Figure 3, first of all, innerliner 12, canvas chafers 16, body ply 3, and the two beads 4 are fitted about building drum 17.

As shown in Figure 4, once innerliner 12, canvas chafers 16, body ply 3, and the two beads 4 are fitted about building drum 17, a first turn-up is made to turn body ply 3, together with innerliner 12 and canvas chafers 16, outwardly up about beads 4 to form carcass 2 of tyre 1. To do this, bladders 22 are inflated and, at the same time, building drum 17 is contracted axially (i.e. lateral sections 20 are moved axially closer together, and centre section 19 is contracted axially). When making the first turn-up, building drum 17 (i.e. centre section 19 of building drum 17) may also be expanded radially to improve the quality of the turn-up if necessary. Before making the first turn-up, bead locking devices 21 are expanded radially to lock body ply 3 against beads 4 and prevent it from slipping with respect to beads 4 when making the first turn-up.

As shown in Figure 5, once the first turn-up is made, tread belt 8, cap ply 10, and tread 7 are applied successively to carcass 2. To ensure tread 7 adheres to the underlying carcass 2 (as shown in Figure 6), pressure rollers 23 are rolled along the ends of tread 7 to press the ends of tread 7 firmly against carcass 2 underneath.

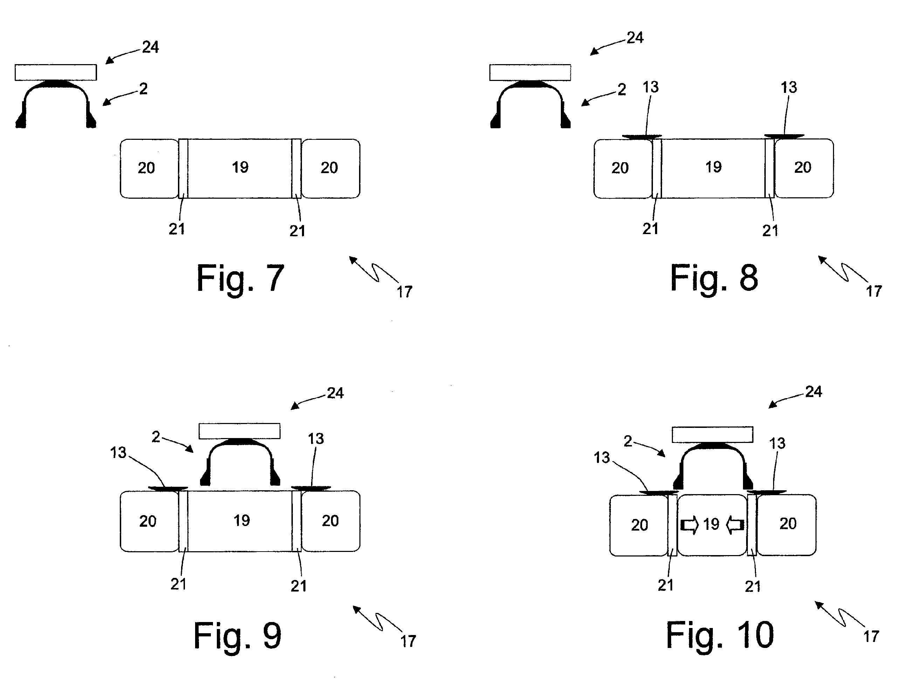

As shown in Figure 7, once tread 7 adheres firmly to carcass 2, carcass 2 is removed from building drum 17, by radially contracting and axially expanding building drum 17, i.e. by axially expanding and, at the same time, radially contracting centre section 19 of building drum 17, as lateral sections 20 move axially apart. Radially contracting centre section 19 allows carcass 2 to be removed axially off building drum 17.

Carcass 2 is removed axially off building drum 17 using an annular gripping member 24, which expands and contracts radially between a release position, in which the inside diameter of annular gripping member 24 is much larger than the outside diameter of carcass 2, and a grip position, in which the inside diameter of annular gripping member 24 substantially equals the outside diameter of carcass 2 (more specifically, in the grip position, annular gripping member 24 exerts a given pressure on carcass 2 to grip it firmly). Annular gripping member 24 (expanded radially into the release position) is first placed about building drum 17 and carcass 2; is then contracted radially about carcass 2 into the grip position gripping carcass 2; and, finally, is withdrawn axially from building drum 17, taking carcass 2 with it and so also removing carcass 2 axially from building drum 17.

As shown in Figure 8, while carcass 2 is retained by annular gripping member 24 off building drum 17, the two sidewalls 13 are slipped axially onto building drum 17.

As shown in Figure 9, once sidewalls 13 are placed about building drum 17, annular gripping member 24, still holding carcass 2, is moved axially to move carcass 2 axially back into position about building drum 17.

As shown in Figure 10, once carcass 2 is positioned about building drum 17, building drum 17 contracts axially (i.e. lateral sections 20 of building drum 17 move axially closer together, and centre section 19 of building drum 17 contracts axially) to position sidewalls 13 partly beneath carcass 2 (i.e. to position carcass 2 partly over sidewalls 13).

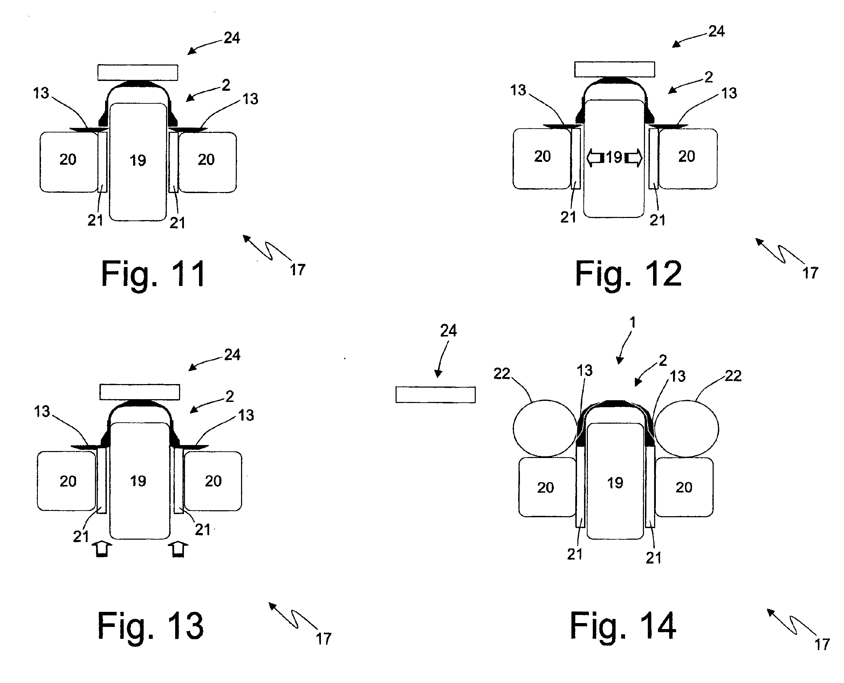

As shown in Figure 11, once sidewalls 13 are positioned partly beneath carcass 2, building drum 17 (i.e. centre section 19 of building drum 17) expands radially to insert centre section 19 partly inside carcass 2, which at this stage is still engaged by annular gripping member 24.

As shown in Figure 12, once centre section 19 of building drum 17 is expanded radially, building drum 17 expands axially (i.e. lateral sections 20 of building drum 17 move axially apart, and centre section 19 of building drum 17 expands axially) so centre section 19 of building drum 17 presses against beads 4, thus centring carcass 2 axially with respect to building drum 17, i.e. ensuring carcass 2 is in the correct axial position on building drum 17 and therefore with respect to sidewalls 13.

As shown in Figure 13, once carcass 2 is centred axially with respect to building drum 17, bead locking devices 21 are expanded radially to lock sidewalls 13 to carcass 2 at beads 4.

As shown in Figure 14, once bead locking devices 21 are expanded radially, a second turn-up is made to turn sidewalls 13 outwardly up about carcass 2.

As shown in Figure 14, once bead locking devices 21 are expanded radially, annular gripping member 24 is expanded radially to release carcass 2, and is then removed axially from building drum 17 to allow the second turn-up to be made. Alternatively, annular gripping member 24 may be expanded radially to release carcass 2, and then removed axially from building drum 17 after carcass 2 is centred axially with respect to building drum 17, and before bead locking devices 21 are expanded radially, or after centre section 19 of building drum 17 is expanded radially, and before carcass 2 is centred axially with respect to building drum 17.

The second turn-up shown in Figure 14 completes the construction of tyre 1 (which is obviously still green, pending curing, but at this point has all its component parts). So tyre 1 is removed from building drum 17 by annular gripping member 24, in the same way as described with reference to Figure 7.

The tyre building method described therefore provides for producing tyre 1 (i.e. an envelope tyre in 'sidewall over tread' mode) using a single-stage building drum 17 forming part of a unistage machine.

## Claims

1. A building method for building a tyre (1) having an envelope structure in 'sidewall over tread' mode, in which two opposite lateral ends of a body ply (3) are located beneath a tread belt (8) and the sidewalls (13) are placed over a tread (7); the tyre (1) is built using one building drum (17) comprising a centre section (19), and two lateral sections (20) on opposite sides of the centre section (19); the building method comprising the steps of:
placing an innerliner (12), the body ply (3), and two beads (4) about the building drum (17);
executing a first turn-up to turn the body ply (3) outwardly up about the beads (4) to form a carcass (2) of the tyre (1);
applying a tread belt (8) and a tread (7) to the carcass (2) and over the two opposite lateral ends of the body ply (3); and
removing the carcass (2) off the building drum (17);
the building method being **characterized by** comprising the further steps of:
placing two sidewalls (13) about the same building drum (17);
re-placing the carcass (2) about the building drum (17) and partly over the sidewalls (13); and
executing a second turn-up to turn the sidewalls (13) outwardly up about the carcass (2) and over the tread (7).

2. A building method as claimed in Claim 1, and comprising the further steps of:
simultaneously radially expanding and axially contracting the building drum (17) when executing the first turn-up; and
simultaneously radially contracting and axially expanding the building drum (17) after applying the tread belt (8) and the tread (7) to the carcass (2), and before removing the carcass (2) off the building drum (17).

3. A building method as claimed in Claim 1 or 2, wherein the step of removing the carcass (2) off the building drum (17) comprises the further steps of:
placing an annular gripping member (24) about the carcass (2) on the building drum (17);
gripping the carcass (2) by means of the annular gripping member (24), and by contracting the annular gripping member (24) radially about the carcass (2); and
removing the carcass (2) off the building drum (17) by axially moving the annular gripping member (24) gripping the carcass (2).

4. A building method as claimed in Claim 3, wherein the step of re-placing the carcass (2) about the building drum (17) comprises the further steps of:
placing the carcass (2) about the building drum (17) by axially moving the annular gripping member (24) gripping the carcass (2);
simultaneously radially expanding and axially contracting the centre section (19) of the building drum (17) to insert the centre section (19) of the building drum (17) partly inside the carcass (2); and
releasing the carcass (2) from the annular gripping member (24) by radially expanding the annular gripping member (24) after inserting the centre section (19) of the building drum (17) partly inside the carcass (2).

5. A building method as claimed in Claim 4, and comprising the further step of radially expanding the centre section (19) of the building drum (17) to press the centre section (19) of the building drum (17) against the beads (4), after inserting the centre section (19) of the building drum (17) partly inside the carcass (2), and before executing the second turn-up.

6. A building method as claimed in Claim 5, and comprising the further step of releasing the carcass (2) from the annular gripping member (24) by radially expanding the annular gripping member (24) after radially expanding the centre section (19) of the building drum (17) to press the building drum (17) against the beads (4).

7. A building method as claimed in one of Claims 1 to 6, and comprising the further step of simultaneously radially expanding and axially contracting the centre section (19) of the building drum (17), to insert the centre section (19) of the building drum (17) partly inside the carcass (2) before executing the second turn-up.

8. A building method as claimed in Claim 7, and comprising the further step of radially expanding the centre section (19) of the building drum (17) to press the centre section (19) of the building drum (17) against the beads (4) after inserting the centre section (19) of the building drum (17) partly inside the carcass (2), and before executing the second turn-up.

9. A building method as claimed in one of Claims 1 to 8, and comprising the further step of radially expanding bead locking devices (21) to lock the sidewalls (13) against the carcass (2) at the beads (4) before executing the second turn-up.

10. A building method as claimed in one of Claims 1 to 9, and comprising the further step of placing about the building drum (17) two canvas chafers (16), at the bead area, together with the innerliner (12), the body ply (3), and the two beads (4).

## Patentansprüche

1. Ein Aufbauverfahren zur Aufbauen eines Reifens (1) mit einer Hüllstruktur in einer "Seitenwand-über-Lauffläche"-Art, in welchem zwei gegenüberliegende laterale Enden einer Körperlage (3) unterhalb eines Laufflächenbandes (8) positioniert sind, und die Seitenwände (13) über einer Lauffläche (7) angeordnet sind; wobei der Reifen (1) unter Verwendung einer Aufbautrommel (17) aufgebaut ist, welche einen Zentralabschnitt (19) und zwei laterale Abschnitte (20) auf gegenüberliegenden Seiten des Zentralabschnitts (19) aufweist; wobei das Aufbauverfahren die folgenden Schritte aufweist:
Anordnen eines Innenliners (12), der Körperlage (3) und zweier Wülste (4) um die Aufbautrommel (17);
Ausführen eines ersten Umschlagens, um die Körperlage (3) nach außen hoch um die Wülste (4) umzuschlagen, um eine Karkasse (2) des Reifens (1) zu bilden;
Aufbringen eines Laufflächenbandes (8) und einer Lauffläche (7) auf die Karkasse (2) und über die zwei gegenüberliegenden lateralen Enden der Körperlage (3); und
Entfernen der Karkasse (2) aus der Aufbautrommel (17);
wobei das Aufbauverfahren **dadurch gekennzeichnet ist, dass** es die weiteren Schritte aufweist:
Anordnen zweier Seitenwände (13) um dieselbe Aufbautrommel (17);
Wiederanordnen der Karkasse (2) um die Aufbautrommel (17) und teilweise über die Seitenwände (13); und
Ausführen eines zweiten Umschlagens, um die Seitenwände (13) nach außen hoch um die Karkasse (2) und über die Lauffläche (7) umzuschlagen.

2. Aufbauverfahren nach Anspruch 1, und die weiteren folgenden Schritte aufweisend:
simultanes radiales Ausdehnen und axiales Zusammenziehen der Aufbautrommel (17), wenn das erste Umschlagen durchgeführt wird; und
simultanes radiales Zusammenziehen und axiales Ausdehnen der Aufbautrommel (17) nach dem Aufbringen des Laufflächenbandes (8) und der Lauffläche (7) auf die Karkasse (2), und vor dem Entfernen der Kasse (2) aus der Aufbautrommel (17).

3. Aufbauverfahren nach Anspruch 1 oder 2, wobei der Schritt des Entfernens der Karkasse (2) aus der Aufbautrommel (17) die weiteren folgenden Schritte aufweist:
Anordnen eines ringförmigen Greifbauteils (24) um die Karkasse (2) auf der Aufbautrommel (17);
Greifen der Karkasse (2) mittels des ringförmigen Greifbauteils (24) und durch radiales Zusammendrücken des ringförmigen Greifbauteils (24) um die Karkasse (2); und
Entfernen der Karkasse (2) aus der Aufbautrommel (17) durch axiales Bewegen des ringförmigen Greifbauteils (24), welches die Karkasse (2) greift.

4. Aufbauverfahren nach Anspruch 3, wobei der Schritt des Wiederanordnens der Karkasse (2) um die Aufbautrommel (17) die weiteren folgenden Schritte aufweist:
Anordnen der Karkasse (2) um die Aufbautrommel (17) durch axiales Bewegen des ringförmigen Greifbauteils (24), welches die Karkasse (2) greift;
simultanes radiales Ausdehnen und axiales Zusammenziehen des Zentralabschnitts (19) der Aufbautrommel (17), um den Zentralabschnitt (19) der Aufbautrommel (17) teilweise in die Karkasse (2) einzufügen; und
Freigeben der Karkasse (2) aus dem ringförmigen Greifbauteil (24) durch radiales Ausdehnen des ringförmigen Greifbauteils (24) nach dem teilweisen Einfügen des Zentralabschnitts (19) der Aufbautrommel (17) in die Karkasse (2).

5. Aufbauverfahren nach Anspruch 4, und weiterhin den Schritt eines radialen Ausdehnens des Zentralabschnitts (19) der Aufbautrommel (17) aufweisend, um den Zentralabschnitt (19) der Aufbautrommel (17) gegen die Wülste (4) zu drücken, nach dem teilweisen Einfügen des Zentralabschnitts (19) der Aufbautrommel (17) in die Karkasse (2) und vor dem Ausführen des zweiten Umschlagens.

6. Aufbauverfahren nach Anspruch 5, und weiterhin den Schritt eines Freigebens der Karkasse (2) aus dem ringförmigen Greifbauteil (24) durch radiales Ausdehnen des ringförmigen Greifbauteils (24) nach dem radialen Ausdehnen des Zentralabschnitts (19) der Aufbautrommel (17) aufweisend, um die Aufbautrommel (17) gegen die Wülste (4) zu drücken.

7. Aufbauverfahren nach irgendeinem der Ansprüche 1 bis 6, und den weiteren Schritt eines simultanen radialen Ausdehnens und axialen Zusammenziehens des Zentralabschnitts (19) der Aufbautrommel (17) aufweisend, um den Zentralabschnitt (19) der Aufbautrommel (17) teilweise in die Karkasse (2) einzufügen, bevor das zweite Umschlagen ausgeführt wird.

8. Aufbauverfahren nach Anspruch 7, und den weiteren Schritt eines radialen Ausdehnens des Zentralabschnitts (19) der Aufbautrommel (17) aufweisend, um den Zentralabschnitt (19) der Aufbautrommel (17) gegen die Wülste (4) zu drücken, nachdem der Zentralabschnitt (19) der Aufbautrommel (17) teilweise in die Karkasse (2) eingefügt wird, und bevor das zweite Umschlagen ausgeführt wird.

9. Aufbauverfahren nach irgendeinem der Ansprüche 1 bis 8, und den weiteren Schritt eines radialen Ausdehnens von Wulstsperrvorrichtungen (21) aufweisend, um die Seitenwände (13) gegen die Karkasse (2) an den Wülsten (4) zu sperren, bevor das zweite Umschlagen ausgeführt wird.

10. Aufbauverfahren nach irgendeinem der Ansprüche 1 bis 9, und den weiteren Schritt eines Anordnens um die Aufbautrommel (17) von zwei Wulstschutzbändern (16) an dem Wulstbereich zusammen mit dem Innenliner (12), der Körperlage (3) und den zwei Wülsten (4) aufweisend.

## Revendications

1. Procédé de fabrication pour fabriquer un pneu (1) ayant une structure d'enveloppe en mode "flanc au-dessus de la bande de roulement", dans lequel deux extrémités latérales opposées d'un pli de corps (3) sont positionnées au-dessous d'une ceinture de bande de roulement (8) et les flancs (13) sont placés au-dessus d'une bande de roulement (7) ; le pneu (1) est fabriqué en utilisant un tambour de construction (17) comprenant une section centrale (19) et deux sections latérales (20) sur des côtés opposés de la section centrale (19); le procédé de fabrication comprenant les étapes consistant à:
placer un revêtement interne (12), le pli de corps (3) et deux talons (4) autour du tambour de construction (17);
exécuter un premier retournement pour retourner le pli de corps (3) vers l'extérieur autour des talons (4) afin de former une carcasse (2) du pneu (1);
appliquer une ceinture de bande de roulement (8) et une bande de roulement (7) sur la carcasse (2) et au-dessus des deux extrémités latérales opposées du pli de corps (3); et
retirer la carcasse (2) du tambour de construction (17);
le procédé de fabrication étant **caractérisé en ce qu'**il comprend les étapes supplémentaires consistant à:
placer deux flancs (13) autour du même tambour de construction (17);
replacer la carcasse (2) autour du tambour de construction (17) et partiellement au-dessus des flancs (13); et
exécuter un second retournement pour retourner les flancs (13) vers l'extérieur autour de la carcasse (2) et au-dessus de la bande de roulement (7).

2. Procédé de fabrication selon la revendication 1, et comprenant les étapes supplémentaires consistant à :
expanser radialement et contracter axialement simultanément le tambour de construction (17) lors de l'exécution du premier retournement ; et
contracter radialement et expanser axialement simultanément le tambour de construction (17) après avoir appliqué la ceinture de bande de roulement (8) et la bande de roulement (7) sur la carcasse (2), et avant de retirer la carcasse (2) du tambour de construction (17).

3. Procédé de fabrication selon la revendication 1 ou 2, dans lequel l'étape consistant à retirer la carcasse (2) du tambour de construction (17) comprend les étapes supplémentaires consistant à :
placer un élément de préhension annulaire (24) autour de la carcasse (2) sur le tambour de construction (17) ;
saisir la carcasse (2) au moyen de l'élément de préhension annulaire (24), et en contractant l'élément de préhension annulaire (24) radialement autour de la carcasse (2) ; et
retirer la carcasse (2) du tambour de construction (17) en déplaçant axialement l'élément de préhension annulaire (24) saisissant la carcasse (2).

4. Procédé de fabrication selon la revendication 3, dans lequel l'étape consistant à replacer la carcasse (2) autour du tambour de construction (17) comprend les étapes supplémentaires consistant à :
placer la carcasse (2) autour du tambour de construction (17) en déplaçant de manière axiale l'élément de préhension annulaire (24) saisissant la carcasse (2) ;
expanser radialement et contracter axialement simultanément la section centrale (19) du tambour de construction (17) pour insérer la section centrale (19) du tambour de construction (17) partiellement à l'intérieur de la carcasse (2) ; et
libérer la carcasse (2) de l'élément de préhension annulaire (24) en expansant radialement l'élément de préhension annulaire (24) après avoir inséré la section centrale (19) du tambour de construction (17) partiellement à l'intérieur de la carcasse (2).

5. Procédé de fabrication selon la revendication 4 et comprenant l'étape supplémentaire consistant à expanser radialement la section centrale (19) du tambour de construction (17) pour comprimer la section centrale (19) du tambour de construction (17) contre les talons (4) après avoir inséré la section centrale (19) du tambour de construction (17) partiellement à l'intérieur de la carcasse (2) et avant d'exécuter le second retournement.

6. Procédé de fabrication selon la revendication 5 et comprenant l'étape supplémentaire consistant à libérer la carcasse (2) de l'élément de préhension annulaire (24) en expansant radialement l'élément de préhension annulaire (24) après avoir expansé radialement la section centrale (19) du tambour de construction (17) afin de comprimer le tambour de construction (17) contre les talons (4).

7. Procédé de fabrication selon l'une des revendications 1 à 6, et comprenant l'étape supplémentaire consistant à expanser radialement et contracter axialement simultanément la section centrale (19) du tambour de construction (17), afin d'insérer la section centrale (19) du tambour de construction (17) partiellement à l'intérieur de la carcasse (2) avant d'exécuter le second retournement.

8. Procédé de fabrication selon la revendication 7, et comprenant l'étape supplémentaire consistant à expanser radialement la section centrale (19) du tambour de construction (17) afin de comprimer la section centrale (19) du tambour de construction (17) contre les talons (4) après avoir inséré la section centrale (19) du tambour de construction (17) partiellement à l'intérieur de la carcasse (2) et avant d'avoir exécuté le second retournement.

9. Procédé de fabrication selon l'une des revendications 1 à 8 et comprenant l'étape supplémentaire consistant à expanser radialement des dispositifs de verrouillage de talon (21) pour verrouiller les flancs (13) contre la carcasse (2) au niveau des talons (4) avant d'exécuter le second retournement.

10. Procédé de fabrication selon l'une des revendications 1 à 9, et comprenant l'étape supplémentaire consistant à placer autour du tambour de construction (17), deux bandelettes talons en toile (16) au niveau de la zone de talon, conjointement avec le revêtement interne (12), le pli de corps (3) et les deux talons (4).
